Europäisches Patentamt

European Patent Office

Office européen des brevets

(11) Veröffentlichungsnummer: **0 146 643**
**A1**

(12) # EUROPÄISCHE PATENTANMELDUNG

(21) Anmeldenummer: 83112274.2

(22) Anmeldetag: 06.12.83

(51) Int. Cl.⁴: **B 65 G 57/09**
B 65 G 57/24, B 65 G 61/00

(43) Veröffentlichungstag der Anmeldung:
**03.07.85 Patentblatt 85/27**

(84) Benannte Vertragsstaaten:
**DE FR GB IT SE**

(71) Anmelder: **Icoma Packtechnik GmbH**
**Fautenbacher Strasse 26**
**D-7590 Achern(DE)**

(72) Erfinder: **Corteccia, Robert**
**No. 6, Route de Claix**
**F-16400 La Couronne(FR)**

(74) Vertreter: **Patentanwälte Dipl.-Ing. Bodo Thielking**
**Dipl.-Ing. Otto Elbertzhagen**
**Gadderbaumer Strasse 20**
**D-4800 Bielefeld 1(DE)**

(54) **Palettiervorrichtung.**

(57) Bei einer Vorrichtung zum Palettieren von Stapelgut ist neben einer Hubbühne (5), die unter einer Verteilereinrichtung (2) sitzt und die die zu befüllenden Paletten (4) trägt, ein Magazin (7) angeordnet. Nach dem Befüllen der Palette wird die Hubbühne (5) nach unten gefahren und die Palette seitlich von der Hubplattform wegtransportiert. In dieser Zeit wird über eine Greif- und Haltevorrichtung (9) eine neue Palette vom Magazin (7) entnommen und so lange in die Position unter dem Verteiler (2) gehalten, bis die Hubbühne (5) diese neue Palette aufnehmen. In der Zwischenzeit kann die Verteilereinrichtung (2) die neue Palette bereits mit der ersten Schicht belegen.

Fig. 2

EP 0 146 643 A1

Palettiervorrichtung
_____

Die Erfindung betrifft eine Vorrichtung zum Palettieren von Stapelgut, insbesondere von befüllten Papiersäcken oder von Papiersackstapeln, mit einer Zuführbahn für das Stapelgut, einem Verteiler für das Legen des Stapelguts in einer vorgegebenen Ebene, mit einer unterhalb des Verteilers angeordneten Hubbühne zum vertikalen Verfahren einer Palette, ferner mit einem neben der Hubbühne angeordneten Magazin für gestapelte Leerpaletten und mit einer Vorrichtung zum Verfahren jeweils einer Leerpalette auf die unterhalb des Verteilers angeordnete Hubbühne.

Bei einer bekannten Vorrichtung dieser Art kann die Zufuhr einer neuen Palette auf die in der unteren Position befindliche Hubbühne erst erfolgen, wenn die volle Palette von der Hubbühne entfernt worden ist. Anschließend muß die Hubbühne mit der Leerpalette bis in die obere Befüllage verfahren werden. In dieser Zeit müssen die von der Produktionsanlage zugeführten Stapelgüter gespeichert werden. Dies erfolgt üblicherweise auf einer Speicherstrecke. Nach dem Erreichen der Befüllposition durch die leere Palette müssen einerseits die während des Palettenwechsels gespeicherten Stapelgüter, andererseits auch die ständig von der Produktionsanlage ankommenden Stapelgüter gestapelt werden. Es muß also die Palettiereinrichtung wesentlich schneller arbeiten als die Produktionsanlage und außerdem muß eine ausreichende Speicherstrecke vorhanden sein. Das geschilderte Problem ist besonders schwierig zu lösen für Produktionsanlagen mit einer Leistung von mehr als fünf Stapelgütern oder Gebinden pro Minute. Sie erfordern eine besonders große Speichereinrichtung und außerdem eine hohe Palettiergeschwindigkeit.

Ausgehend von diesem Stand der Technik liegt der Erfindung die Aufgabe zugrunde, eine Vorrichtung der bekannten Art so auszubilden, daß die Zahl der zu speichernden Stapelgüter während des Palettenwechsels möglichst gering ist.

Die Lösung dieser Aufgabe erfolgt dadurch, daß das Magazin eine Hubvorrichtung aufweist und oberhalb des Magazins eine Greif- und Haltevorrichtung angeordnet ist, die zum Aufnehmen der jeweils obersten Leerpalette aus dem Magazin und zum seitlichen Verfahren über die Hubbühne sowie zum Halten der Leerpalette während des Legens der ersten Stapelgutlage ausgebildet ist.

Eine solche Vorrichtung erlaubt es, die Zeit zwischen dem Ablegen des Stapelguts in der letzten Schicht der befüllten Palette und dem Legen der ersten Schicht auf der neuen Palette sehr kurz zu halten. Aus diesem Grund ist die Zahl der während dieser Phase anfallenden, zu speichernden Stapelgüter vergleichsweise gering. Es kann bereits eine Leerpalette zum Beschicken in Stellung gebracht werden, bevor die befüllte vorhergehende Palette von der Hubbühne entfernt worden ist. Während der Zeit vom Räumen der Hubbühne bis zum Hochfahren der Hubbühne in die Aufnahmeposition für die neue Palette kann diese neue Palette bereits weiter beschickt werden, da in dieser Zeit die neue Palette von der Greif- und Haltevorrichtung gehalten wird. Erst nachdem die Hubbühne ihre obere Position erreicht hat, nimmt sie die vorher von der Greif- und Haltevorrichtung gehaltene neue Palette auf, die bis dahin zumindest bereits teilweise belegt worden ist.

Bei einer bevorzugten Ausführungsform der Erfindung besteht die Greif- und Haltevorrichtung aus einem in waagerechter Ebene geführten Laufwagen.

Ferner hat es sich als zweckmäßig erwiesen, daß die Hubbühne eine Rollenbahn aufweist, die in der unteren Lage mit einer benachbarten ortsfesten Rollenbahn fluchtet.

Bei einer besonders vorteilhaften Ausführungsform besteht die Zuführbahn aus einem Förderband.

Nachstehend wird eine bevorzugte Ausführungsform
der Erfindung anhand der Zeichnung im einzelnen
beschrieben. Es zeigen:

Figur 1  -  eine Darstellung der Vorrichtung
             während der Zeit, in der sich die
             Palette auf dem Hubwagen befindet,

Figur 2  -  eine Darstellung der Phase, in
             der die befüllte Palette vom Hubwagen abläuft und eine neue Leerpalette von der Greif- und Halte-
             vorrichtung über die Hubbühne ge-
             halten und dort belegt wird.

An einem Maschinenrahmen 1 sitzt ein Verteiler 2,
der in bekannter Weise verschiedene Bewegungen
durchführen und das Stapelgut 3 jeweils in der
oberen Schicht auf einer Palette 4 ablegen kann.
Der Verteiler ist um seine Achse drehbar sowie
in Längs- und Querrichtung über der Palette
4 verfahrbar.

Die Palette 4 liegt auf der Plattform 5a einer
Hubbühne 5 auf. Das Stapelgut 3 kommt von einer
nicht dargestellten Produktionsmaschine und
wird über eine als Förderband ausgebildete Zuführbahn 6 zugeführt. Von der Förderbahn 6 gelangt das Stapelgut 3 auf den Verteiler 2.

Neben der Hubbühne 5 ist ein Magazin 7 angeordnet. Das Magazin 7 ist in Richtung des
Doppelpfeils 8 aufwärts und abwärts verfahrbar.

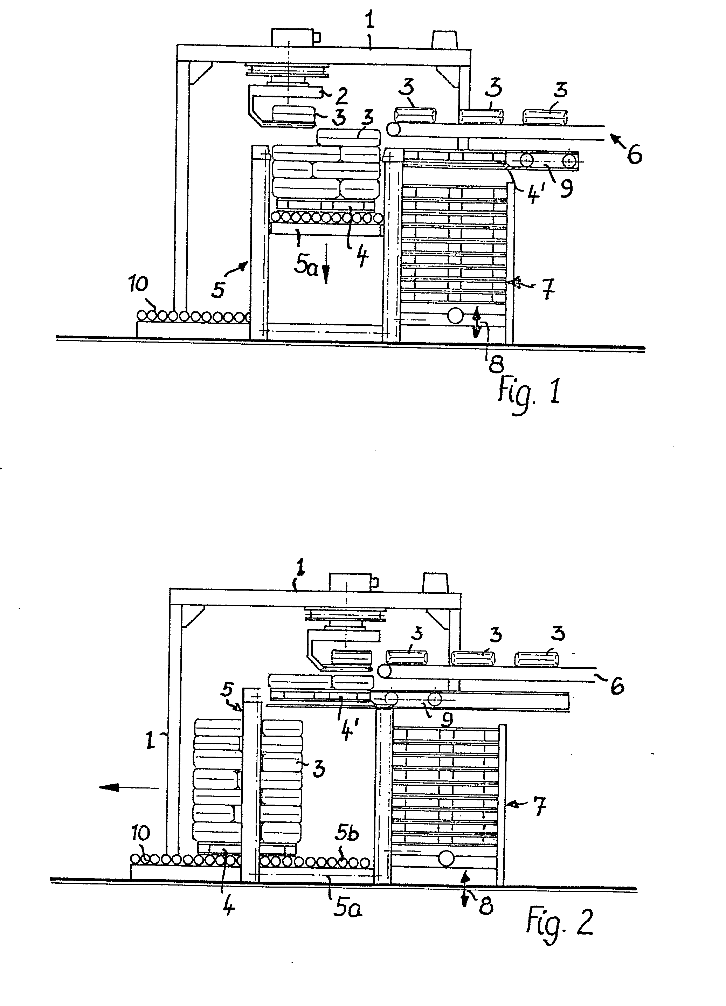

Die jeweils oberste Leerpalette 4' wird von der Greif- und Haltevorrichtung 9 abgenommen und nach dem Befüllen und Absenken der Palette 4 in die in Figur 2 dargestellte Lage verschoben. In dieser Lage belegt der Verteiler 2 die Leerpalette bereits mit der ersten Schicht. Nach dem Entfernen der befüllten Palette 4 kann die Plattform 5a der Hubbühne 5 so weit nach oben fahren, daß die neue Palette 4' aufliegt. Danach wird die Greif- und Haltevorrichtung 9 wieder zurückgefahren und sie nimmt vom Magazin 7 eine neue Leerpalette ab. Hierzu fährt die Greif- und Haltevorrichtung 9 gemäß den Zeichnungsfiguren weit nach rechts. Anschließend wird das Magazin 7 so weit nach oben angehoben, daß die oberste Palette in der Ebene der Greif- und Haltevorrichtung 9 liegt. Die Greif- und Haltevorrichtung 9 nimmt die oberste Palette auf und das Magazin fährt wieder abwärts.

0146643

Patentansprüche:

1. Vorrichtung zum Palettieren von Stapelgut, insbesondere von befüllten Papiersäcken oder von Papiersackstapeln, mit einer Zuführbahn für das Stapelgut, einem Verteiler für das Legen des Stapelguts in einer vorgegebenen Ebene, mit einer unterhalb des Verteilers angeordneten Hubbühne zum vertikalen Verfahren einer Palette, ferner mit einem neben der Hubbühne angeordneten Magazin für gestapelte Leerpaletten und mit einer Vorrichtung zum Verfahren jeweils einer Leerpalette auf die unterhalb des Verteilers angeordnete Hubbühne,
dadurch gekennzeichnet,
daß das Magazin (7) eine Hubvorrichtung aufweist und daß oberhalb des Magazins (7) eine Greif- und Haltevorrichtung (9) angeordnet ist, die zum Aufnehmen der jeweils obersten Leerpaletten (4') aus dem Magazin (7) und zum seitlichen Verfahren über die Hubbühne (5) sowie zum Halten der Leerpalette (4') während des Legens der ersten Stapelgutlage ausgebildet ist.

2. Vorrichtung nach Anspruch 1,
dadurch gekennzeichnet,
daß die Greif- und Haltevorrichtung (9) aus einem in waagerechter Ebene geführten Laufwagen besteht.

3. Vorrichtung nach Anspruch 1 oder 2,
   dadurch gekennzeichnet,
   daß die Hubbühne (5) eine Rollenbahn (5b)
   aufweist, die in der unteren Lage der Hubbühne mit einer benachbarten ortsfesten
   Rollenbahn (10) fluchtet.

4. Vorrichtung nach einem oder mehreren der
   Ansprüche 1 bis 3,
   dadurch gekennzeichnet,
   daß die Zuführbahn aus einem Förderband
   (6) besteht.

0146643

Fig. 1

Fig. 2

## EUROPÄISCHER RECHERCHENBERICHT

**0146643**
Nummer der Anmeldung

EP 83 11 2274

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 058 225  (JANSON)<br>* Insgesamt *<br><br>----- | 1-4 | B 65 G  57/03<br>B 65 G  57/24<br>B 65 G  61/00 |
|  |  |  | **RECHERCHIERTE SACHGEBIETE (Int. Cl. ³)**<br><br>B 65 G |

Der vorliegende Recherchenbericht wurde für alle Patentansprüche erstellt.

| Recherchenort | Abschlußdatum der Recherche | Prüfer |
|---|---|---|
| DEN HAAG | 18-07-1984 | OSTYN T.J.M. |